(19) Europäisches Patentamt
European Patent Office
Office européen des brevets

(11) **EP 4 674 575 A1**

(12) **EUROPEAN PATENT APPLICATION**
published in accordance with Art. 153(4) EPC

(43) Date of publication:
**07.01.2026   Bulletin 2026/02**

(21) Application number: **23925203.4**

(22) Date of filing: **28.02.2023**

(51) International Patent Classification (IPC):
**B25J 9/10** (2006.01)

(52) Cooperative Patent Classification (CPC):
**B25J 9/10**

(86) International application number:
**PCT/JP2023/007225**

(87) International publication number:
**WO 2024/180646 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NEC Corporation**
**108-8001 Tokyo (JP)**

(72) Inventors:
• **OYAMA, Hiroyuki**
**Tokyo 108-8001 (JP)**
• **TAKANO, Rin**
**Tokyo 108-8001 (JP)**

(74) Representative: **Betten & Resch**
**Patent- und Rechtsanwälte PartGmbB**
**Maximiliansplatz 14**
**80333 München (DE)**

(54) **INFORMATION PROCESSING DEVICE, INFORMATION PROCESSING METHOD, AND STORAGE MEDIUM**

(57)    An information processing apparatus of the present disclosure includes: a predicting unit configured to predict, based on an action plan group composed of a plurality of action plans of a robot on a manipulation target, a state of at least one of each manipulation target and the robot when each of the action plans is executed; a calculating unit configured to calculate a degree of success of the action plan group based on the predicted states; and a changing unit configured to change the action plan group based on the calculated degree of success.

**Fig.8**

**Description**

TECHNICAL FIELD

The present disclosure relates to an information processing apparatus, an information processing method, and a storage medium.

BACKGROUND ART

In recent years, robots have been introduced in various situations, and the automation of operations by robots is being implemented. Along with this, there is a need to generate a control plan for a robot, and it is required to generate an action plan with high success rate. As an example, Patent Literature 1 describes determining the success or failure of a picking action performed by a robot.

CITATION LIST

PATENT LITERATURE

Patent Literature 1: WO2022/123978

SUMMARY OF INVENTION

TECHNICAL PROBLEM

However, the technique described in Patent Literature 1 described above does not describe an action plan in which a plurality of actions are combined, which leads to a problem that optimization of such an action plan cannot be achieved.

Accordingly, an object of the present disclosure is to provide an information processing apparatus that can solve the abovementioned problem of being unable to optimize an action plan in which a plurality of actions are combined.

SOLUTION TO PROBLEM

An information processing apparatus as an aspect of the present disclosure includes: a predicting unit configured to predict, based on an action plan group composed of a plurality of action plans of a robot on a manipulation target, a state of at least one of each manipulation target and the robot when each of the action plans is executed; a calculating unit configured to calculate a degree of success of the action plan group based on the predicted states; and a changing unit configured to change the action plan group based on the calculated degree of success.

Further, an information processing method as an aspect of the present disclosure includes: predicting, based on an action plan group composed of a plurality of action plans of a robot on a manipulation target, a state of at least one of each manipulation target and the robot when each of the action plans is executed; calculating a degree of success of the action plan group based on the predicted states; and changing the action plan group based on the calculated degree of success.

Further, a program as an aspect of the present disclosure includes instructions for causing a computer to execute processes to: predict, based on an action plan group composed of a plurality of action plans of a robot on a manipulation target, a state of at least one of each manipulation target and the robot when each of the action plans is executed; calculate a degree of success of the action plan group based on the predicted states; and change the action plan group based on the calculated degree of success.

ADVANTAGEOUS EFFECTS OF INVENTION

Configured as described above, the present disclosure can achieve the optimization of an action plan in which a plurality of actions are combined.

BRIEF DESCRIPTION OF THE DRAWINGS

[Fig. 1] Fig. 1 is a block diagram showing a configuration of an information processing apparatus in a first example embodiment of the present disclosure.
[Fig. 2] Fig. 2 is a diagram showing a state of processing by the information processing apparatus disclosed in Fig. 1.
[Fig. 3] Fig. 3 is a diagram showing a state of processing by the information processing apparatus disclosed in Fig. 1.
[Fig. 4] Fig. 4 is a diagram showing a state of processing by the information processing apparatus disclosed in Fig. 1.
[Fig. 5] Fig. 5 is a diagram showing a state of processing by the information processing apparatus disclosed in Fig. 1.
[Fig. 6] Fig. 6 is a flowchart showing operation of the information processing apparatus disclosed in Fig. 1.
[Fig. 7] Fig. 7 is a block diagram showing a hardware configuration of an information processing apparatus in a second example embodiment of the present disclosure.
[Fig. 8] Fig. 8 is a block diagram showing a configuration of the information processing apparatus in the second example embodiment of the present disclosure.

DESCRIPTION OF EXAMPLE EMBODIMENTS

<First Example Embodiment>

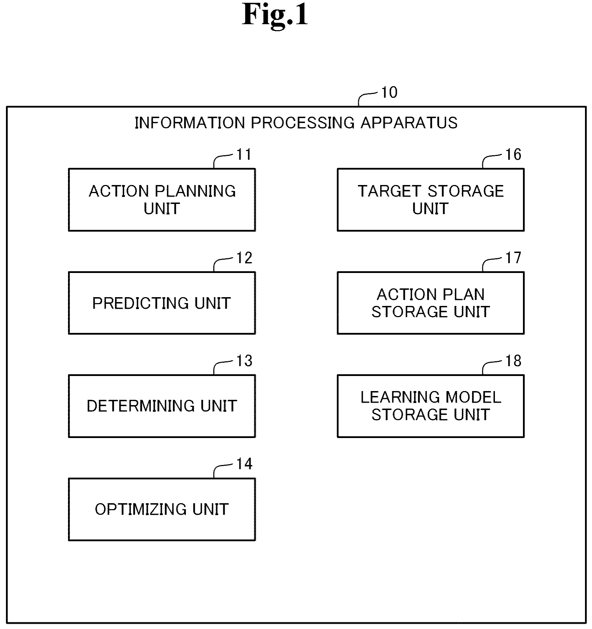

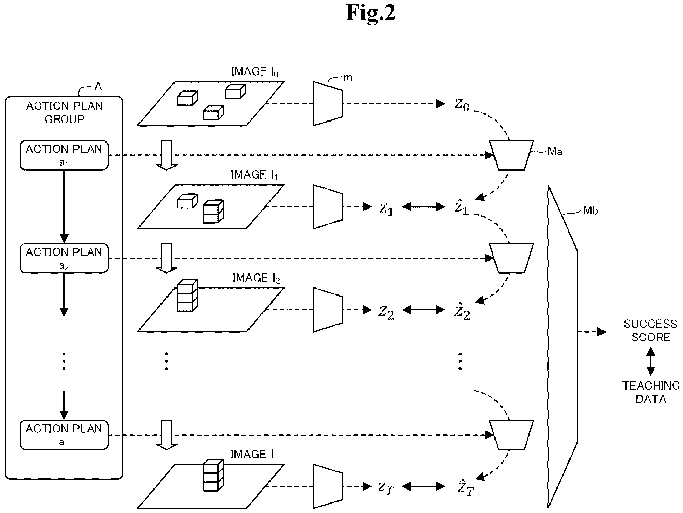

A first example embodiment of the present disclosure will be described with reference to Figs. 1 to 6. Fig. 1 is a diagram for describing a configuration of an information processing apparatus, and Figs. 2 to 6 are diagrams for describing processing operation of the information processing apparatus.

[Configuration]

An information processing apparatus 10 in this example embodiment has a function to optimize an action plan of a robot. Here, in this example embodiment, the robot is assumed to be a robot arm as an example. Then, an action plan of a robot to be optimized is formed by an action plan group including a combination of a plurality of action plans such as "grasping", "moving", and "placing" an object to be manipulated by the robot arm. In this example embodiment, each individual action plan of robot is referred to as a subtask and, for example, as the subtask, the abovementioned action such as "grasping" includes a control command designating the movement positions, movement speeds and movement trajectories of joints of the robot for enabling such an action.

The information processing apparatus 10 is configured with one or a plurality of information processing apparatuses each including an arithmetic logic unit and a memory unit. Then, as shown in Fig. 1, the information processing apparatus 10 includes an action planning unit 11, a predicting unit 12, a determining unit 13, and an optimizing unit 14. The respective functions of the action planning unit 11, the predicting unit 12, the determining unit 13, and the optimizing unit 14 can be enabled by execution of a program for enabling the respective functions stored in the memory unit by the arithmetic logic unit. Moreover, the information processing apparatus 10 includes a target storage unit 16, an action plan storage unit 17, and a learning model storage unit 18. The target storage unit 16, the action plan storage unit 17, and the learning model storage unit 18 are configured with the memory unit. The respective components will be described in detail below.

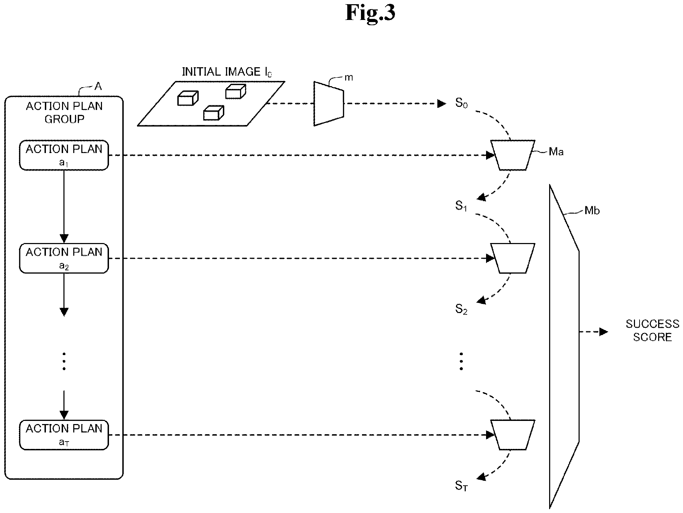

The target storage unit 16 stores target information of an action plan of a robot. For example, the target information includes initial information representing the initial state of each object to be manipulated by the robot and the initial state of the robot, and target information representing a target state after movement relative to the initial state. The initial information of the object and the robot is, for example, an initial image $I_0$ obtained by capturing a space where the object and the robot are located as shown in Fig. 3. However, the information of the initial states may also be coordinate information representing the initial positions of the object and the robot, and may be any information representing the initial states of the object and the robot. Further, the target information of the object includes the coordinate information of the target position of each object to be manipulated, and accordingly, may also include information representing the shape and size of each object and information on the space where the object is located.

Alternatively, the target information may include the movement target position of the robot. However, the target information is not limited to the information described above, and may include any information as long as it is information to be the target for the robot action plan. The initial information representing the initial state and the target information representing the target state described above include information representing the states of each object and the robot in the above illustration, but may include information representing the states of each object and the robot, and may include information representing the state of either each object or the robot.

The action plan storage unit 17 stores action plan information of the robot planned by the action planning unit 11 as will be described later. For example, as shown in Fig. 3, the action plan information is an action plan group A including a set of subtasks $a_1$, $a_2$, ..., which are individual action plans of the robot. The subtask includes, for example, a control command for a robot arm that is the robot, and includes a movement start position, an end position, and a movement trajectory from the start position to the end position of the robot in accordance with an action such as "grasping" an object.

The learning model storage unit 18 stores a learning model generated by being trained in advance in such a manner as to optimize an action plan of a robot as will be described later. Firstly, as the learning model, a first learning model Ma that predicts the state of an object to be manipulated and the state of the robot from an action plan group of the robot is stored. Here, a method for generating the first learning model Ma will be described with reference to Fig. 2.

Firstly, as shown in Fig. 2, as the learning data, an action plan group A including a plurality of action plans $(a_1, a_2, ...)$ that are a plurality of subtasks for causing the robot to actually execute an action, and images $(I_0, I_1, ...)$ obtained by capturing the state of an object to be manipulated and the state of the robot when the robot is caused to actually execute the action plan group A are prepared. An image $I_0$ is an initial image $I_0$ before execution of an action plan, and an image $I_n$ is an image at the time of execution of an action plan of an $n^{th}$ action plan an of the action plan group A. Then, a feature extractor m that extracts a feature value from each image $I_n$ is provided, and the feature value extracted by the feature extractor m is defined as a state feature $Z_n$ representing a state at the time of extraction of the feature value from each action plan $a_n$. In such a situation, the first learning model Ma performs learning using a state feature $Z_n$ at the time of execution of each action plan $a_n$ described above as teaching data with respect to a predicted state feature $(\hat{Z}_n)$ of the object or robot after execution of a predetermined action plan $(a_n)$, which is an output by accepting input of a state feature $(\hat{Z}_{n-1})$ of the object or robot before execution of a predetermined action plan and a predetermined action plan $(a_n)$ to be executed. The image and the state feature $Z_n$ described above may

include information representing the states of each object and the robot, and may include information representing the state of either each object or the robot.

Specifically, as shown in Fig. 2, an initial state feature $(Z_0)$ is firstly extracted from the initial image $I_0$ by the feature extractor m, and the first learning model Ma accepts input of the initial state feature $(Z_0)$ and a first action plan $(a_1)$, and outputs a first predicted state feature $(\hat{Z}_1)$. Subsequently, the first learning model Ma accepts input of the first predicted state feature $(\hat{Z}_1)$. and a second action plan $(a_2)$, and outputs a second predicted state feature $(\hat{Z}_2)$. By repeatedly executing this, the first learning model Ma generates a predicted state feature group $(\hat{Z})$ shown in Formula 1 below.

[Formula 1]

$$\hat{Z}_1, \hat{Z}_2, ..., \hat{Z}_T,$$

Then, the first learning model Ma learns in such a manner as to minimize the error between the predicted state feature group (2) and the state feature Z extracted from each image $I_n$ at the time of execution of each action plan $a_n$, and the parameter is thereby updated. For example, machine learning is performed using the Calbuck Reibler divergence between the predicted state feature group (2) and the state feature Z, and the first learning model Ma is thereby generated.

Further, the learning model storage unit 18 stores a second learning model Mb that calculates the degree of success of an action plan group, as the learning model. Here, a method for generating the second learning model Mb will be described with reference to Fig. 2.

First, as shown in Fig. 2, as learning data, a predicted state feature group $(\hat{Z})$ of an object and a robot corresponding to each action plan $a_n$ of the action plan group A, generated using the first learning model Ma described above, and a success score representing the degree of success at the time of actually executing the action plan group A are prepared. Then, the second learning model Mb performs learning using the success score at the time of actually executing the action plan group A as teaching data with respect to a success score that is an output at the time of accepting input of the predicted state feature group. Specifically, as shown in Fig. 2, the second learning model Mb learns in such a manner as to minimize the error between an output as a result of input of the predicted state feature group (2) shown in Formula 1 and the degree of success at the time of actually executing the action plan group A, and the parameter is thereby updated. For example, machine learning is performed using the cross-entropy error between the success score and the teaching data, and the second learning model Mb is generated. In this example embodiment, the second learning model Mb is assumed to be configured to output a success score with a higher degree of success as the value is higher, so that a teaching label may also be configured with information representing the success score. However, the second learning model Mb may be configured to output only the presence or absence of success, and accordingly, the teaching data may be information representing only the presence or absence of success.

The action planning unit 11 generates action plan information representing an action plan of the robot based on the initial information and the target information stored in the target storage unit 16. For example, the action planning unit 11 generates an action plan of the robot in such a manner as to move each object to a target position specified by the target information from the initial image $I_0$ that is initial information as shown in Fig. 3 and information on the initial positions of an object to be manipulated and the robot. At this time, as shown in Fig. 3, the action planning unit 11 generates an action plan group A including a set of subtasks $(a_1, a_2, ...)$ that are individual action plans of the robot as the action plan information. For example, as a subtask, the action planning unit 11 generates a control command including the movement start position, end position, and movement trajectory of the robot together with an action such as "grasping" an object. Then, the action planning unit 11 stores the generated action plan group A composed of a plurality of subtasks into the action plan storage unit 17.

The action planning unit 11 is not limited to generating, as a subtask of the action plan information, a detailed control command of the robot including the movement trajectory and the like as described above, and may generate action plan information including a combination of subtasks representing a rough control content. For example, the action planning unit 11 may generate rough action plan information in which subtasks such as grasping an object x and moving an object x are combined along a time series. Further, the action planning unit 11 may acquire action plan information set in advance.

The predicting unit 12 predicts, using the first learning model Ma, a state at the time of executing a subtask that is each of a plurality of action plans, based on the generated action plan group. Specifically, as shown in Fig. 3, the predicting unit 12 extracts an initial state feature $(S_0)$ from an initial image $I_0$ representing an initial state of an object to be manipulated or the robot by the feature extractor m, inputs the initial state feature $(S_0)$ and a first action plan $(a_1)$ into the first learning model Ma, and outputs a first predicted state feature $(S_1)$. Subsequently, the predicting unit 12 inputs the first predicted state feature $(S_1)$ and a second action plan $(a_2)$ into the first learning model Ma and outputs a second predicted state feature $(S_2)$. By repeatedly executing this, the predicting unit 12 generates a predicted state feature group $(S_1, S_2, ..., S_T)$ using the first learning model Ma.

The determining unit 13 (calculating unit) inputs the predicted state features $(S_1, S_2, ..., S_T)$ having been predicted into the second learning model Mb, and calculates a success score representing the degree of success of the action plan group A. The determining unit 13 then determines whether the calculated success score is equal to or more than a preset threshold value, and determines whether the control of the robot by the action plan group A is successful. In a case where the success score is equal to or more than the threshold value, the determining unit 13 determines that optimization of the action plan group A is not necessary, but in a case where the success score is less than the threshold value, the determining unit 13 determines that optimization of the action plan group A is necessary and notifies the optimizing unit 14.

Furthermore, in a case where the success score is less than the threshold value, the determining unit 13 calculates a success score of each of the subtasks ($a_1$, $a_2$, ...) of the action plan group A, and specifies a subtask that needs to be optimized. For example, as shown in Fig .4, the determining unit 13 inputs the predicted state features ($S_1$, $S_2$, ...) having been predicted in correspondence with the respective subtasks ($a_1$, $a_2$, ...) into the second learning model Mb, and calculates outputs ($P_1$, $P_2$, ...) as success scores corresponding to the respective subtasks ($a_1$, $a_2$, ...). Then, the determining unit 13 specifies, among the subtasks ($a_1$, $a_2$, ...), a subtask that the success score ($P_1$, $P_2$, ...) corresponding to the subtask ($a_1$, $a_2$, ...) is less than the threshold value, a subtask that the success score is the lowest level, or a subtask that the success score is one of the lowest few, as a subtask that requires optimization, and notifies the optimizing unit 14.

However, even when the success score is less than the threshold value, the determining unit 13 may not specify a subtask to be optimized. In this case, the determining unit 13 may simply notify the optimizing unit 14 that optimization of the action plan group A is necessary.

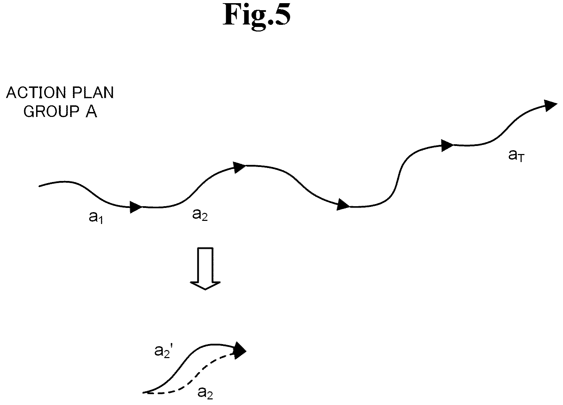

When receiving the notification from the determining unit 13 that the optimization is necessary as described above, the optimizing unit 14 (changing unit) changes the action plan group A and performs optimization. For example, when receiving the notification with a subtask to be optimized been specified, the optimizing unit 14 changes the action plan content of the specified subtask and performs optimization. Here, as shown in Fig. 5, it is assumed that the subtask $a_2$ of the action plan group A is specified as needing optimization. In this case, the optimizing unit 14 changes the action plan content by changing the movement path of the robot in such a manner as from a dotted line $a_2$ to a solid line $a_2$' in Fig. 5 without changing the start state and the end state of each object to be manipulated and the robot in the subtask $a_2$. That is to say, in this example, the optimizing unit 14 does not change the coordinates of the start position and the end position of the robot in the subtask $a_2$, but changes only the movement paths of each object and the robot therebetween. However, the optimizing unit 14 is not limited to simply changing the movement paths of each object and the robot in a subtask as described above, and may change any content of an action plan.

The optimizing unit 14 may change the action plan contents of a plurality of subtasks, or may change the action plan content of a subtask that is not specified as one that should be optimized. In addition, the start state and end state in a subtask described above may include information representing the start states and end states of each object and the robot, or may include information representing the start state and end state of either each object or the robot.

Further, the optimizing unit 14 is not necessarily limited to optimizing by changing the action plan content of a subtask, and may change the content of the action plan group A by other methods. For example, in a case where a subtask to be optimized is not specified, the optimizing unit 14 may change the order of subtasks in the action plan group A or add a new subtask, and accordingly, may change the action plan content of each subtask in such a manner that the action plan group A can be enabled with a series of subtasks. As an example, the order of manipulations for each object to be manipulated may be changed, and a new subtask that becomes necessary as a result of this may be added.

[Operation]

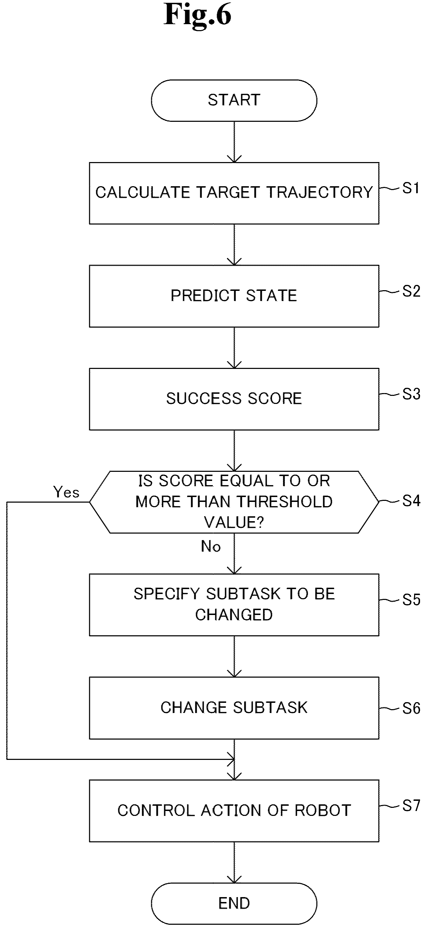

Next, the operation of the above information processing apparatus 10 will be described with reference to the flowchart of Fig. 6 mainly.

The information processing apparatus 10 generates action plan information representing an action plan of a robot based on initial information and target information (step S1). At this time, the information processing apparatus 10 generates an action plan group A including a set of a plurality of subtasks ($a_1$, $a_2$, ...) as the action plan information. As an example, the information processing apparatus 10 generates a control command including a movement start position, an end position and a movement trajectory of each object and the robot in the subtask. However, the information processing apparatus 10 may generate action plan information including a combination of subtasks representing a rough control content.

Subsequently, the information processing apparatus 10 predicts, based on the generated action plan group, a state when each of the subtasks that are a plurality of action plans is executed by using the first learning model Ma (step S2). At this time, as shown in Fig. 3, the information processing apparatus 10 firstly extracts an initial state feature ($S_0$) from an initial image $I_0$ representing the initial state of an object to be manipulated and the robot by the feature extractor m, inputs the initial state feature ($S_0$) and a first action plan ($a_1$) into the first learning model Ma, and outputs a first predicted state feature ($S_1$). Subsequently, the information processing apparatus inputs the first predicted state feature ($S_1$) and a second action plan ($a_2$) into the first learning model Ma and outputs a second predicted state feature ($S_2$). By repeatedly executing this, the information processing apparatus generates a predicted state feature group ($S_1$, $S_2$, ..., $S_T$) using the first learning model Ma.

Subsequently, the information processing apparatus 10 inputs the predicted state feature group ($S_1$, $S_2$, ..., $S_T$) having been predicted into the second learning model Mb and calculates a success score representing the degree of success of the action plan group A (step S3). Then, the information processing apparatus 10 determines whether the calculated success score is equal to or more than a preset threshold value (step S4), and determines whether control of the robot by the action plan group A is successful. In a case where the success score is equal to or more than the threshold value (Yes in step S4), the information processing apparatus 10 then performs action control of the robot based on the action plan group A (step S7).

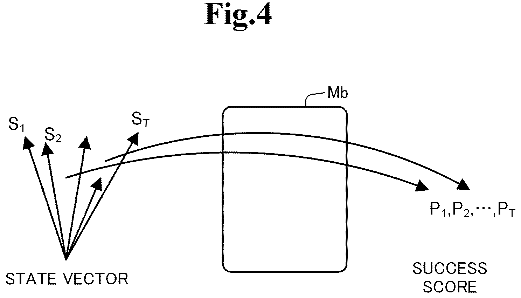

On the other hand, in a case where the success score is less than the threshold value (No in step S4), the information processing apparatus 10 performs optimization of the action plan group A. At this time, the information processing apparatus 10 calculates a success score for each of the subtasks ($a_1$, $a_2$, ...) of the action plan group A, and specifies a subtask that needs to be optimized (step S5). For example, as shown in Fig. 4, the information processing apparatus 10 inputs the predicted state features ($S_1$, $S_2$, ...) predicted in correspondence with the respective subtasks ($a_1$, $a_2$, ...) into the second learning model Mb, calculates the outputs ($P_1$, $P_2$, ...) as success scores corresponding to the respective subtasks ($a_1$, $a_2$, ...), and specifies a subtask that needs optimization based on the success scores ($P_1$, $P_2$, ...).

Then, the information processing apparatus 10 performs optimization by changing the action plan content of the specified subtask (step S6). For example, in a case where optimization of the subtask $a_2$ is necessary, the information processing apparatus 10 changes the action plan content, for example, by changing the movement path from a dotted line $a_2$ to a solid line $a_2$' shown in Fig. 5, without changing the start state and the end state of the robot in the subtask $a_2$. The information processing apparatus 10 is not necessarily limited to optimizing by changing the action plan content of a subtask, and may change the content of the action plan group A by another method. For example, in a case where a subtask to be optimized is not specified, the optimizing unit 14 may change the order of the subtasks in the action plan group A or add a new subtask, and accordingly, may change the action plan content of each subtask in such a manner that the action plan group A can be enabled with a series of subtasks.

After that, the information processing apparatus 10 performs optimization by changing the action plan content of the specified subtask, and then performs motion control of the robot based on the action plan group A (step S7). The information processing apparatus 10 may calculate a success score of the action plan group A after change of the action plan content, and repeat the above processing until the success score exceeds the threshold value.

As described above, according to this example embodiment, the states of a manipulation target and a robot in an action plan group are predicted, the degree of success is calculated, and the action plan group is changed based on the degree of success. Therefore, it is possible to optimize an action plan group composed of a plurality of subtasks. In particular, in this example embodiment, a subtask is specified based on degree of success of each subtask included in an action plan group, and the content of the specified subtask is changed. As a result, the optimization of an action plan group can be performed more appropriately.

<Second Example Embodiment>

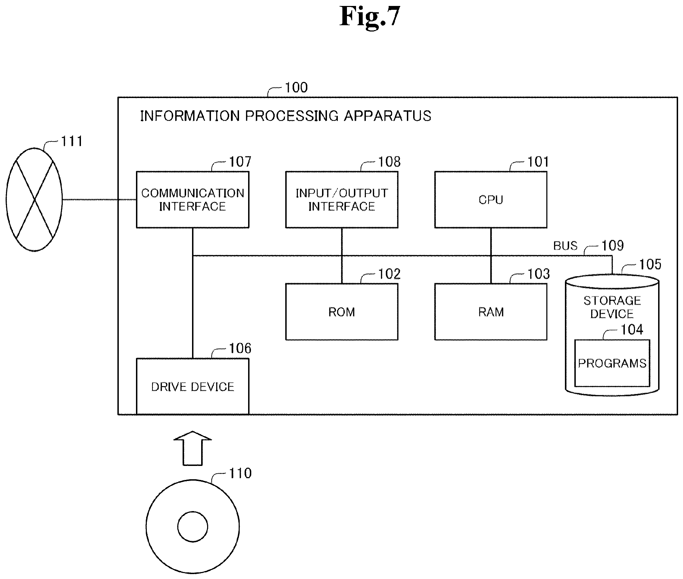

Next, a second example embodiment of the present disclosure will be described with reference to Figs. 7 to 8. Figs. 7 to 8 are block diagrams showing a configuration of an information processing apparatus in the second example embodiment. In this example embodiment, the overview of the configuration of the information processing apparatus described in the above example embodiment is shown.

Firstly, a hardware configuration of an information processing apparatus 100 in this example embodiment will be described with reference to Fig. 7. The information processing apparatus 100 is configured with a general information processing apparatus and, as an example, has the following hardware configuration including:

 a CPU (Central Processing Unit) 101 (arithmetic logic unit);
 a ROM (Read Only Memory) 102 (memory unit);
 a RAM (Random Access Memory) 103 (memory unit);
 programs 104 loaded into the RAM 103;
 a storage device 105 storing the programs 104;
 a drive device 106 that performs reading from and writing into a storage medium 110 external to the information processing apparatus;
 a communication interface 107 connected to a communication network 111 external to the information processing apparatus;
 an input/output interface 108 that performs input/output of data; and
 a bus 109 connecting the components.

Fig. 7 shows an example of the hardware configuration of an information processing apparatus serving as the information processing apparatus 100, and the hardware configuration of the information processing apparatus is not limited to the abovementioned case. For example, the information processing apparatus may be configured with part of the abovementioned configuration, such as not having the drive device 106. Moreover, the information processing apparatus may use a GPU (Graphic Processing Unit), a DSP (Digital Signal Processor), an MPU (Micro Processing Unit), an FPU (Floating point number Processing Unit), a PPU (Physics Processing Unit), a TPU (Tensor Processing Unit), a quantum processor, a microcontroller, or a combination of these, instead of the abovementioned CPU.

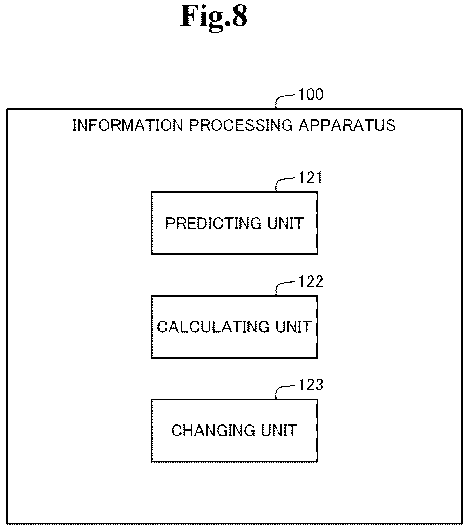

Then, the information processing apparatus 100 can construct and include a predicting unit 121, a calculating unit 122, and a changing unit 123 shown in Fig. 8 by acquisition and execution of the programs 104 by the CPU 101. The programs 104 are, for example, stored in advance in the storage device 105 or the ROM 102, and are loaded into the RAM 103 and executed by the CPU 101 as necessary. In addition, the programs 104 may be provided to the CPU 101 via the communication network 111, or the programs may be stored in advance in the storage medium 110 and read out and provided to the CPU 101 by the drive device 106. However, the predicting unit 121, the calculating unit 122, and the changing unit 123 described above may be constructed using dedicated electronic circuits for enabling such means.

The predicting unit 121 predicts, based on an action plan group composed of a plurality of action plans of a robot on a manipulation target, a state of at least one of each manipulation target and the robot when each of the action plans is executed. For example, the predicting unit 121 inputs a state before execution of an action plan of a prediction target and the action plan of the prediction target into a first learning model and thereby predicts a state when the action plan of the prediction target is executed.

The calculating unit 122 calculates a degree of success of the action plan group based on the predicted states. At this time, the calculating unit 122 specifies an action plan of the action plan group based on the degree of success.

The changing unit 123 changes the action plan group based on the calculated degree of success. At this time, for example, the changing unit 123 changes a content of the specified action plan.

With the configuration as described above, the present disclosure predicts the state of the manipulation target or the robot in the action plan group, calculates the degree of success, and changes the action plan group based on the degree of success. Therefore, it is possible to optimize an action plan group composed of a plurality of action plans.

The abovementioned program can be stored using various types of non-transitory computer-readable mediums and provided to a computer. The non-transitory computer-readable medium includes various types of tangible storage mediums. Examples of non-transitory computer-readable medium include magnetic recording medium (e.g., flexible disk, magnetic tape, hard disk drive), magneto-optical recording medium (e.g., magneto-optical disk), read only memory (CD-ROM), CD-R, CD-R/W, semiconductor memory (e.g., mask ROM, programmable ROM, Erasable PROM, flash ROM, random access memory (RAM)). In addition, a program may be provided to a computer by various types of temporary computer-readable medium. Examples of temporary computer-readable medium include electrical signals, optical signals, and electromagnetic waves. The temporary computer-readable medium may provide a program to the computer via a wired communication channel, such as an electric wire and an optical fiber, or a wireless communication channel.

Although the present disclosure has been described above with reference to the above-described example embodiments, the present disclosure is not limited to the embodiments described above. The configuration and details of the present disclosure can be changed in a variety of ways that those skilled in the art can understand within the scope of the present disclosure. In addition, at least one or more functions of the predicting unit 121, the calculating unit 122, and the changing unit 123 described above may be executed by an information processing apparatus installation and connected anywhere on the network, that is, may be executed by so-called cloud computing.

<Supplementary Notes>

The whole or part of the example embodiments disclosed above can be described as the following supplementary notes. Hereinafter, the overview of the configurations of an information processing apparatus, an information processing method, and a program in the present disclosure will be described. However, the present disclosure is not limited to the following configurations.

(Supplementary Note 1)

An information processing apparatus comprising:

a predicting unit configured to predict, based on an action plan group composed of a plurality of action plans of a robot on a manipulation target, a state of at least one of each manipulation target and the robot when each of the action plans is executed;
a calculating unit configured to calculate a degree of success of the action plan group based on the predicted states; and
a changing unit configured to change the action plan group based on the calculated degree of success.

(Supplementary Note 2)

The information processing apparatus according to supplementary note 1, wherein:

the calculating unit is configured to specify at least one action plan of the action plan group based on the calculated degree of success; and

the changing unit is configured to change the action plan group based on the specified action plan.

(Supplementary Note 3)

The information processing apparatus according to supplementary note 2, wherein
the changing unit is configured to change a plan content of the specified action plan.

(Supplementary Note 4)

The information processing apparatus according to supplementary note 3, wherein
the changing unit is configured to change the plan content without changing a start state and an end state in the specified action plan.

(Supplementary Note 5)

The information processing apparatus according to any of supplementary notes 2 to 4, wherein
the calculating unit is configured to calculate the degree of success of each of the action plans in the action plan group and specify the action plan based on the degree of success of each of the action plans.

(Supplementary Note 6)

The information processing apparatus according to supplementary note 5, wherein
the calculating unit is configured to calculate the degree of success of the action plan group based on a state group including the states corresponding to the respective action plans and a preset learning model, and also calculate the degrees of success of the respective action plans based on the states corresponding to the respective action plans and the learning model.

(Supplementary Note 7)

The information processing apparatus according to any of supplementary notes 1 to 6, wherein
the predicting unit is configured to predict the state when each of the action plans is executed by inputting the state before executing the action plan and the action plan to be executed into a first learning model.

(Supplementary Note 8)

An information processing method comprising:

predicting, based on an action plan group composed of a plurality of action plans of a robot on a manipulation target, a state of at least one of each manipulation target and the robot when each of the action plans is executed;
calculating a degree of success of the action plan group based on the predicted states; and
changing the action plan group based on the calculated degree of success.

(Supplementary Note 9)

The information processing method according to supplementary note 8, comprising:

specifying at least one action plan of the action plan group based on the calculated degree of success; and
changing the action plan group based on the specified action plan.

(Supplementary Note 10)

The information processing method according to supplementary note 9, comprising
changing a plan content of the specified action plan.

(Supplementary Note 11)

The information processing method according to supplementary note 9 or 10, comprising
calculating the degree of success of each of the action plans in the action plan group and specifying the action plan based on the degree of success of each of the action plans.

(Supplementary Note 12)

The information processing method according to supplementary note 11, comprising
calculating the degree of success of the action plan group based on a state group including the states corresponding to the respective action plans and a preset learning model, and also calculating the degrees of success of the respective action plans based on the states corresponding to the respective action plans and the learning model.

(Supplementary Note 13)

The information processing method according to any of supplementary notes 8 to 12, comprising
predicting the state when each of the action plans is executed by inputting the state before executing the action plan and the action plan to be executed into a first learning model.

(Supplementary Note 14)

A non-transitory computer-readable storage medium storing a program, the program comprising instructions for causing a computer to execute processes to:

predict, based on an action plan group composed of a plurality of action plans of a robot on a manipulation target, a state of at least one of each manipulation target and the robot when each of the action plans is executed;
calculate a degree of success of the action plan group based on the predicted states; and
change the action plan group based on the calculated degree of success.

REFERENCE SIGNS LIST

10 information processing apparatus
11 action planning unit
12 predicting unit
13 determining unit
14 optimizing unit
16 target storage unit
17 action plan storage unit
18 learning model storage unit
100 information processing apparatus
101 CPU
102 ROM
103 RAM
104 programs
105 storage device
106 drive device
107 communication interface
108 input/output interface
109 bus
110 storage medium
111 communication network
121 predicting unit
122 calculating unit
123 changing unit

**Claims**

1. An information processing apparatus comprising:

a predicting unit configured to predict, based on an action plan group composed of a plurality of action plans of a robot on a manipulation target, a state of at least one of each manipulation target and the robot when each of the action plans is executed;
a calculating unit configured to calculate a degree of success of the action plan group based on the predicted states; and
a changing unit configured to change the action plan group based on the calculated degree of success.

2. The information processing apparatus according to claim 1, wherein:

the calculating unit is configured to specify at least one action plan of the action plan group based on the calculated degree of success; and
the changing unit is configured to change the action plan group based on the specified action plan.

3. The information processing apparatus according to claim 2, wherein
the changing unit is configured to change a plan content of the specified action plan.

4. The information processing apparatus according to claim 3, wherein
the changing unit is configured to change the plan content without changing a start state and an end state in the specified action plan.

5. The information processing apparatus according to claim 2, wherein
the calculating unit is configured to calculate the degree of success of each of the action plans in the action plan group and specify the action plan based on the degree of success of each of the action plans.

6. The information processing apparatus according to claim 5, wherein
the calculating unit is configured to calculate the degree of success of the action plan group based on a state group including the states corresponding to the respective action plans and a preset learning model, and also calculate the degrees of success of the respective action plans based on the states corresponding to the respective action plans and the learning model.

7. The information processing apparatus according to claim 1, wherein
the predicting unit is configured to predict the state when each of the action plans is executed by inputting the state before executing the action plan and the action plan to be executed into a first learning model.

8. An information processing method comprising:

predicting, based on an action plan group composed of a plurality of action plans of a robot on a manipulation target, a state of at least one of each manipulation target and the robot when each of the action plans is executed;
calculating a degree of success of the action plan group based on the predicted states; and
changing the action plan group based on the calculated degree of success.

9. The information processing method according to claim 8, comprising:

specifying at least one action plan of the action plan group based on the calculated degree of success; and
changing the action plan group based on the specified action plan.

10. The information processing method according to claim 9, comprising
changing a plan content of the specified action plan.

11. The information processing method according to claim 9, comprising
calculating the degree of success of each of the action plans in the action plan group and specifying the action plan based on the degree of success of each of the action plans.

12. The information processing method according to claim 11, comprising
calculating the degree of success of the action plan group based on a state group including the states corresponding to the respective action plans and a preset learning model, and also calculating the degrees of success of the respective action plans based on the states corresponding to the respective action plans and the learning model.

13. The information processing method according to claim 8, comprising
predicting the state when each of the action plans is executed by inputting the state before executing the action plan and the action plan to be executed into a first learning model.

14. A non-transitory computer-readable storage medium storing a program, the program comprising instructions for causing a computer to execute processes to:

predict, based on an action plan group composed of a plurality of action plans of a robot on a manipulation target, a state of at least one of each manipulation target and the robot when each of the action plans is executed;
calculate a degree of success of the action plan group based on the predicted states; and
change the action plan group based on the calculated degree of success.

# Fig.1

INFORMATION PROCESSING APPARATUS — 10

ACTION PLANNING UNIT — 11

PREDICTING UNIT — 12

DETERMINING UNIT — 13

OPTIMIZING UNIT — 14

TARGET STORAGE UNIT — 16

ACTION PLAN STORAGE UNIT — 17

LEARNING MODEL STORAGE UNIT — 18

# Fig.2

# Fig.3

INITIAL IMAGE $I_0$

A
ACTION PLAN GROUP

ACTION PLAN $a_1$

ACTION PLAN $a_2$

ACTION PLAN $a_T$

m

$S_0$

Ma

$S_1$

Mb

$S_2$

$S_T$

SUCCESS SCORE

# Fig.4

$S_1$ $S_2$ $S_T$

STATE VECTOR

Mb

$P_1, P_2, \cdots, P_T$

SUCCESS SCORE

# Fig.5

ACTION PLAN
GROUP A

# Fig.6

```
        ┌──────────────┐
        │    START     │
        └──────┬───────┘
               │
               ▼
   ┌───────────────────────────┐
   │ CALCULATE TARGET TRAJECTORY│──S1
   └───────────┬───────────────┘
               │
               ▼
   ┌───────────────────────────┐
   │       PREDICT STATE        │──S2
   └───────────┬───────────────┘
               │
               ▼
   ┌───────────────────────────┐
   │       SUCCESS SCORE        │──S3
   └───────────┬───────────────┘
               │
               ▼
        IS SCORE EQUAL TO OR
 Yes    MORE THAN THRESHOLD     ──S4
◄───────       VALUE?
│              No│
│               ▼
│  ┌───────────────────────────┐
│  │   SPECIFY SUBTASK TO BE    │──S5
│  │        CHANGED             │
│  └───────────┬───────────────┘
│              │
│              ▼
│  ┌───────────────────────────┐
│  │      CHANGE SUBTASK        │──S6
│  └───────────┬───────────────┘
│              │
└──────────────┤
               ▼
   ┌───────────────────────────┐
   │   CONTROL ACTION OF ROBOT  │──S7
   └───────────┬───────────────┘
               │
               ▼
        ┌──────────────┐
        │     END      │
        └──────────────┘
```

# Fig.7

INFORMATION PROCESSING APPARATUS ~100

~111

COMMUNICATION INTERFACE ~107

INPUT/OUTPUT INTERFACE ~108

CPU ~101

BUS ~109

~105

ROM ~102

RAM ~103

STORAGE DEVICE

PROGRAMS ~104

DRIVE DEVICE ~106

~110

# Fig.8

EP 4 674 575 A1

INTERNATIONAL SEARCH REPORT

International application No.

PCT/JP2023/007225

| A. | CLASSIFICATION OF SUBJECT MATTER |
|---|---|

*B25J 9/10*(2006.01)i
FI:   B25J9/10 A

According to International Patent Classification (IPC) or to both national classification and IPC

| B. | FIELDS SEARCHED |
|---|---|

Minimum documentation searched (classification system followed by classification symbols)

B25J1/00-21/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 5-150835 A (SANYO ELECTRIC CO., LTD.) 18 June 1993 (1993-06-18) paragraphs [0026]-[0036], fig. 1-7 | 1-3, 5, 8-11, 14 |
| A | | 4, 6-7, 12-13 |
| A | JP 2022-67006 A (OMRON CORPORATION) 02 May 2022 (2022-05-02) | 1-14 |
| A | WO 2022/123978 A1 (SONY GROUP CORPORATION) 16 June 2022 (2022-06-16) | 1-14 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

19

INTERNATIONAL SEARCH REPORT
Information on patent family members

International application No.

**PCT/JP2023/007225**

| Patent document cited in search report | | | Publication date (day/month/year) | Patent family member(s) | | Publication date (day/month/year) |
|---|---|---|---|---|---|---|
| JP | 5-150835 | A | 18 June 1993 | (Family: none) | | |
| JP | 2022-67006 | A | 02 May 2022 | WO | 2022/085339  A1 | |
| WO | 2022/123978 | A1 | 16 June 2022 | (Family: none) | | |

Form PCT/ISA/210 (patent family annex) (January 2015)

**REFERENCES CITED IN THE DESCRIPTION**

**Patent documents cited in the description**

- WO 2022123978 A